# FASCICULE DE BREVET EUROPEEN

(11) **EP 2 172 074 B1**
(45) Date de publication et mention de la délivrance du brevet: **04.07.2018**
(21) Numéro de dépôt: 08826713.3
(22) Date de dépôt: 18.07.2008
(51) Int. Cl.: H04W 40/24, H04W 40/28, H04L 12/725

(54) **POINT D'ACCES ET NOEUD POUR CONTROLER LE ROUTAGE DANS UN RESEAU HYBRIDE**
ZUGANGSPUNKT UND KNOTEN ZUR STEUERUNG DES ROUTINGS IN EINEM HYBRIDNETZWERK
ACCESS POINT AND NODE FOR CONTROLLING ROUTING IN A HYBRID NETWORK

(30) Priorité: 20.07.2007 FR 0756647
(43) Date de publication de la demande: 07.04.2010
(73) Titulaire: Orange, 75015 Paris (FR)
(72) Inventeur: JAVAID, Usman, Newbury RG14 1JL (GB); AHMED, Toufik, F-33400 Talance (FR); MEDDOUR, Djamal-Eddine, F-22300 Lannion (FR)
(74) Mandataire: Delumeau, François Guy
(86) Numéro de dépôt international: PCT/FR2008/051364
(87) Numéro de publication internationale: WO 2009/016308

(56) Documents cités:
- WO-A2-2004/064303
- WO-A2-2004/064303
- US-A1- 2007 070 959
- US-A1- 2007 070 959
- PERKINS NOKIA RESEARCH CENTER E BELDING-ROYER UNIVERSITY OF CALIFORNIA C ET AL: "Ad hoc On-Demand Distance Vector (AODV) Routing; rfc3561.txt", NETWORK WORKING GROUP RFC 1717, INTERNET SOCIETY (ISOC) 4, RUE DES FALAISES CH- 1205 GENEVA, SWITZERLAND, CH, 1 juillet 2003 (2003-07-01), XP015009343, ISSN: 0000-0003
- TONGHONG LI, QUNYING XIE, JINGWANG, WINSTON SEAH: "Seamless Multi-hop Handover in IPv6 Based Hybrid Wireless Networks" INTERNET ARTICLE, [Online] 2005, pages 1-10, XP002478351 Extrait de l'Internet: URL:http://www.springerlink.com/content/ej y2xgymll1nm7bn/fulltext.pdf> [extrait le 2008-04-24]
- ALI HAMIDIAN, ULF KÖRNER, ANDERS NILSSON: "Performance of Internet Access Solutions in Mobile Ad Hoc Networks" INTERNET ARTICLE, [Online] avril 2007 (2007-04), pages 1-13, XP002478352 Extrait de l'Internet: URL:http://www.telecom.lth.se/Personal/ale xh/Dagstuhl_Final11.pdf> [extrait le 2008-04-24]
- HOSSAM EL-MOSHRIFY ET AL: "Gateway Discovery in Ad hoc On-Demand Distance Vector (AODV) Routing for Internet Connectivity" NATIONAL RADIO SCIENCE CONFERENCE, 2007. NRSC 2007, IEEE, PI, mars 2007 (2007-03), pages 1-8, XP031177378 ISBN: 977-5031-86-9
- PERKINS NOKIA RESEARCH CENTER E BELDING-ROYER UNIVERSITY OF CALIFORNIA C ET AL: "Ad hoc On-Demand Distance Vector (AODV) Routing; rfc3561.txt", NETWORK WORKING GROUP RFC 1717, INTERNET SOCIETY (ISOC) 4, RUE DES FALAISES CH- 1205 GENEVA, SWITZERLAND, CH, 1 July 2003 (2003-07-01), XP015009343, ISSN: 0000-0003

## Description

### Arrière-plan de l'invention

La présente invention se rapporte au domaine du routage dans les réseaux de télécommunication hybrides, autrement appelés réseaux maillés sans fil (en anglais « wireless mesh networks, WMN »).

De tels réseaux permettent d'interfacer par l'intermédiaire de points d'accès (ou passerelles) des réseaux de télécommunication mobile ad hoc, dans lesquels des équipements mobiles appelés « noeuds » sont libres de se déplacer et de communiquer sans fil les uns avec les autres, avec un réseau d'infrastructure.

Les réseaux hybrides résolvent notamment les problèmes connus de mise à l'échelle et de performance dont souffrent les réseaux mobiles ad hoc. Par ailleurs, le réseau d'infrastructure intégré au réseau ad-hoc en renforce considérablement le contrôle et la sécurité.

Les noeuds couverts par un même point d'accès dans un réseau hybride forment un réseau ad hoc. Quand deux réseaux ad hoc se recouvrent, même partiellement, ils forment un réseau ad hoc plus large.

Dans un réseau hybride, un message émis par un noeud source vers un noeud destination, peut être routé de bout en bout au sein du réseau ad hoc ou via les points d'accès.

Le document WO2004/064303 décrit un système et un procédé permettant à un réseau de communication ad-hoc de maintenir une connectivité entre des points d'accès intelligents du réseau et des noeuds mobiles du réseau, via un algorithme de routage.

L'invention vise plus particulièrement la recherche de la meilleure route pour acheminer un message entre un noeud source et un noeud destination dans un réseau hybride.

De nombreux efforts de recherche ont porté sur le problème de déterminer un protocole de routage efficace dans un réseau hybride.

Les solutions existantes à ce jour peuvent être classées en deux catégories.

Dans les solutions de la première catégorie, chaque noeud du réseau met en oeuvre ses propres algorithmes de recherche de topologie et maintient lui-même la connaissance de cette topologie. Ces solutions ne sont pas modulaires, et consomment de la puissance de calcul dans chacun des noeuds, ce qui peut être préjudiciable quand ceux-ci ont des ressources énergétiques limitées. Au surplus, le trafic total généré par l'ensemble des noeuds pour ce contrôle peut devenir très important lorsque le nombre de noeuds augmente.

Dans la deuxième catégorie de solutions, chaque noeud du réseau informe périodiquement le point d'accès de l'état des liens qui le concerne, le point d'accès utilisant ces informations pour maintenir la connaissance de la topologie du réseau dans son intégralité. La mise à jour permanente de la topologie entière du réseau par le point d'accès nécessite un trafic de contrôle purement dédié à cet effet très important. Or, il est légitime de considérer que tous les noeuds ne sont pas « actifs », à un instant donné, c'est-à-dire susceptible de communiquer avec un autre noeud ou avec un point d'accès. De telles solutions génèrent dont des paquets de contrôle fortement redondants en toute inutilité.

### Objet et résumé de l'invention

Selon un premier aspect, l'invention concerne un procédé de traitement d'un message d'annonce diffusé, dans un réseau de télécommunications hybride, par un point d'accès auprès duquel au moins un premier noeud du réseau a pu s'enregistrer par l'envoi d'une requête d'enregistrement.

Ce procédé, susceptible d'être mis en oeuvre par un deuxième noeud dudit réseau, comporte :
- une étape d'envoi, par le deuxième noeud et à destination du point d'accès, d'un message de réponse au message d'annonce ;
- une première étape de vérification au cours de laquelle le deuxième noeud vérifie s'il a un statut représentatif du fait qu'il n'a pas contribué à l'acheminement d'une requête d'enregistrement, l'étape d'envoi étant effectuée uniquement en cas de succès de la première étape de vérification.

Selon un deuxième aspect, l'invention concerne un procédé de sélection d'une route entre un noeud source et un noeud destination susceptible d'être mis en oeuvre par un point d'accès dans un réseau de télécommunication hybride. Ce procédé comportant :
- une étape d'enregistrement dans une table de topologie du point d'accès, pour au moins un noeud du réseau, d'un identifiant de ce noeud et d'une route entre ce noeud et le point d'accès, sur réception d'une requête d'enregistrement émise par ce noeud ;
- une étape de réception de messages émis par des noeuds du réseau en réponse à un message d'annonce diffusé par le point d'accès aux seuls noeuds ayant un statut prédéterminé, ce message reçu comportant une route entre le noeud émetteur de ce message et le point d'accès ; et
- une étape de sélection d'une route parmi toutes les routes possibles entre le noeud source et le noeud destination déterminées à partir des messages de réponse reçus susmentionnés.

Conformément à l'invention, la topologie du réseau hybride est maintenue à jour par les points d'accès. Cette caractéristique permet avantageusement de centraliser les algorithmes de routage dans les points d'accès et résout les problèmes de performance et de modularité des solutions existantes de la première catégorie.

Conformément à l'invention, la mise à jour de la topologie par le point d'accès se fait sur la base de messages de contrôle envoyés uniquement par certains noeuds du réseau, ce qui limite considérablement l'encombrement du réseau pour le contrôle de la topologie par rapport aux solutions de la deuxième catégorie.

Dans un mode de réalisation, le procédé de traitement selon l'invention comporte :
- une deuxième étape de vérification au cours de laquelle le deuxième noeud vérifie qu'il a un statut représentatif du fait qu'il est enregistré auprès du point d'accès ou du fait qu'il a contribué à l'acheminement de la requête d'enregistrement du au moins un premier noeud vers le point d'accès ; et, en cas de succès de ladite deuxième étape de vérification :
- une étape de retransmission dudit message d'annonce vers au moins un noeud dudit réseau en tenant compte d'une profondeur de diffusion comprise dans le message d'annonce.

Dans un mode de réalisation, la table de topologie comprend des informations relatives à des noeuds appartenant à une zone active. Par "zone active" au sens de l'invention, on entend un ensemble de noeuds comprenant au moins un noeud enregistré auprès du point d'accès, des noeuds intermédiaires qui servent de relais à un noeud enregistré et des noeuds récepteurs de ce message d'annonce.

Dans un mode de réalisation, le procédé de sélection selon l'invention comporte une étape au cours de laquelle le point d'accès enregistre dans ladite table de topologie une route extraite dudit message reçu, entre le noeud émetteur de ce message et le point d'accès.

Les routes ainsi extraites permettent au point d'accès de déduire des routes possibles entre le noeud source et le noeud destination même si elles ne passent pas par le point d'accès.

Dans un mode particulier de réalisation, le message d'annonce est diffusé par le point d'accès avec une profondeur d'un saut et relayé par les noeuds du réseau ayant un statut prédéterminé. Les messages relayés peuvent aussi être relayés avec une profondeur d'un saut.

Dans un mode particulier de réalisation de l'invention, les noeuds autorisés à relayer le message d'annonce sont :
- les noeuds de statut « R », c'est-à-dire les noeuds enregistrés dans le point d'accès ; et
- les noeuds de statut « I », à savoir les noeuds intermédiaires, un noeud intermédiaire étant un noeud qui se trouve sur une route empruntée par le message d'enregistrement d'un autre noeud à destination du point d'accès.

Comme il a été dit précédemment seuls certains noeuds sont mémorisés dans la table de topologie du point d'accès. En conséquence, il se peut qu'un noeud destination n'y soit pas enregistré.

Dans ce cas, dans un mode particulier de réalisation, le procédé de sélection selon l'invention comporte une première étape de recherche du noeud destination auprès d'au moins un autre point d'accès, si le point d'accès ne connaît pas le noeud de destination.

Cette première recherche utilise donc les liaisons entre points d'accès et n'encombre pas le réseau ad hoc.

Dans un mode particulier de réalisation, le procédé de sélection selon l'invention comporte, en cas d'échec de la première étape de recherche, une deuxième étape de recherche du noeud destination par un mécanisme de recherche par diffusion (en anglais "ring-based search"). Un exemple d'un tel mécanisme est mis en oeuvre par le protocole de routage AODV (en anglais, Ad-hoc On-Demand Distance Vector) défini dans le document RCF 3561 ("Request for Comments").

Ce mécanisme est donc utilisé uniquement en dernier recours. Il est en effet connu que cet algorithme très efficace présente l'inconvénient majeur de surcharger le réseau avec des messages de contrôle très nombreux.

L'homme du métier comprendra donc que l'invention est très avantageuse par rapport à toutes les solutions qui recourent systématiquement à l'usage du mécanisme de recherche par diffusion pour la recherche d'un noeud destination, que celui soit mis en oeuvre par un point d'accès ou par les noeuds eux-mêmes.

Dans un mode préféré de réalisation, l'étape de sélection de route prend au moins en compte :
- le nombre de sauts entre le noeud source et le noeud destination dans chacune des routes possibles ; ou
- le fait qu'une route possible passe ou non par le point d'accès ; ou
- une qualité de service sur chacune des routes possibles évaluée en fonction d'un type application compris dans la requête d'obtention de route.

Dans un mode particulier de réalisation, les différentes étapes du procédé de sélection et/ou du procédé de traitement d'un message d'annonce sont déterminées par des instructions de programmes d'ordinateurs.

En conséquence, l'invention vise aussi un programme d'ordinateur sur un support d'informations, ce programme étant susceptible d'être mis en oeuvre dans un point d'accès ou plus généralement dans un ordinateur, ce programme comportant des instructions adaptées à la mise en oeuvre des étapes d'un procédé de sélection tel que décrit ci-dessus.

Et l'invention vise aussi un programme d'ordinateur sur un support d'informations, ce programme étant susceptible d'être mis en oeuvre dans un noeud ou plus - généralement dans un ordinateur, ce programme comportant des instructions adaptées à la mise en oeuvre des étapes d'un procédé de traitement de message tel que décrit ci-dessus.

Ces programme peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un point d'accès pouvant être utilisé dans un réseau de télécommunication hybride. Ce point d'accès comporte :
- des moyens d'enregistrement dans une table de topologie, pour au moins un noeud du réseau, d'un identifiant de ce noeud et d'une route entre le noeud et le point d'accès, sur réception d'une requête d'enregistrement émise par ce noeud ;
- des moyens de réception de messages émis par des noeuds du réseau en réponse à un message d'annonce diffusé par le point d'accès aux seuls noeuds ayant un statut prédéterminé, ces messages comportant une route entre ce noeud émetteur et le point d'accès ;
- des moyens d'enregistrement, dans la table de topologie, de la route, en association avec un identifiant du noeud émetteur ;
- des moyens de réception d'une requête émise par le noeud source pour obtenir une route vers le noeud destination ;
- des moyens de sélection d'une route parmi toutes les routes possibles entre ledit noeud source et le noeud destination déterminées à partir des messages de réponse reçus susmentionnés ; et
- des moyens d'envoi d'un message comportant la route sélectionnée au noeud source.

L'invention vise aussi un noeud susceptible d'être utilisé dans un réseau de télécommunications hybride comportant un point d'accès auprès duquel au moins un premier noeud du réseau a pu s'enregistrer par l'envoi d'une requête d'enregistrement, ce noeud comportant :
- des moyens de réception d'un message d'annonce diffusé par le point d'accès, éventuellement relayé par un autre noeud du réseau ;
- des moyens pour vérifier si le noeud a un statut représentatif du fait qu'il n'a pas contribué à l'acheminement d'une requête d'enregistrement ; et
- des moyens d'envoi d'un message de réponse au message d'annonce à destination du point d'accès en cas de succès de la vérification.

L'invention vise aussi un réseau hybride comportant au moins un point d'accès et au moins un noeud tels que mentionnés ci-dessus.

Les avantages et caractéristiques du point d'accès, du noeud et du réseau selon l'invention sont les mêmes que ceux mentionnés ci-dessus en référence au procédé de sélection et au procédé de traitement d'un message. Ils ne seront pas rappelés ici.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un point d'accès conforme à l'invention dans son environnement, dans un mode particulier de réalisation ;
- la figure 2 représente de façon schématique l'architecture matérielle d'un noeud pouvant être utilisé dans le contexte de l'invention ;
- la figure 3 représente de façon schématique l'architecture matérielle d'un point d'accès conforme à l'invention, dans un mode particulier de réalisation ;
- la figure 4 représente, sous forme d'organigramme, les principales étapes mises en oeuvre pour enregistrer un noeud auprès d'un point d'accès conforme à l'invention, dans un mode particulier de réalisation ;
- la figure 5 représente, sous forme d'organigramme, les principales étapes mises en oeuvre pour découvrir un point d'accès et pour découvrir et maintenir à jour la topologie du réseau, dans un mode particulier de mise en oeuvre de l'invention ;
- la figure 6 représente, sous forme d'organigramme, les principales étapes mises en oeuvre pour découvrir une route découvrir une route, dans un mode particulier de mise en oeuvre de l'invention ;
- la figure 7 représente, sous forme d'organigramme, les principales étapes mises en oeuvre pour sélectionner une route, dans un mode particulier de mise en oeuvre de l'invention ; et
- les figures 8 à 10 présentent des données de topologie mémorisées par un point d'accès conforme à l'invention à différents stades de mise en oeuvre de l'invention dans un mode particulier de réalisation.

### Description détaillée d'un mode de réalisation

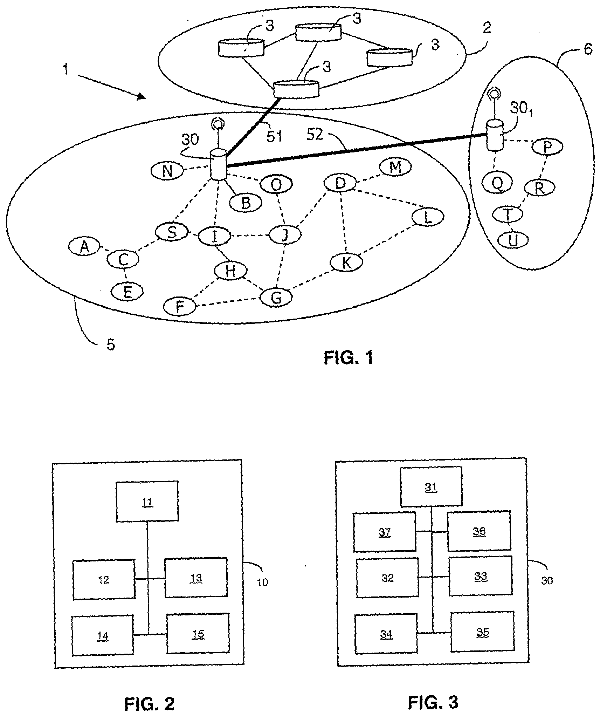

La **figure 1** représente un point d'accès 30, dans son environnement, dans un mode particulier de réalisation de l'invention.

La référence 1 désigne un réseau hybride dans lequel peut être mis en oeuvre un procédé conforme à l'invention.

Ce réseau hybride 1 est constitué par un réseau d'infrastructure fixe 2 et par deux réseaux ad hoc 5 et 6.

Dans l'exemple décrit ici, le réseau d'infrastructure fixe 2 est le réseau Internet.

Les réseaux ad hoc 5 et 6 sont respectivement connectés à un point d'accès 30, 30₁.

Ces points d'accès sont reliés entre eux par une liaison filaire 52.

Dans l'exemple décrit ici, le point d'accès 30 est relié à une entité 3 du réseau Internet 2 par une liaison filaire 51.

Dans l'exemple décrit ici, on s'intéresse à la sélection d'une route pour acheminer des données entre un noeud source S et un noeud destination D du réseau ad hoc 5.

Dans l'exemple décrit ici, tous les noeuds du réseau hybride 1, A à U sont identiques. Ils ont l'architecture matérielle d'un ordinateur conventionnel 10 qui va maintenant être décrit en référence à la **figure 2****.**

Un tel ordinateur comporte un processeur 11, une mémoire vive de type RAM 12, une mémoire morte de type ROM 13 et des moyens de télécommunication 14 pour communiquer avec les autres noeuds du réseau ad hoc et avec les point d'accès 30, 30₁.

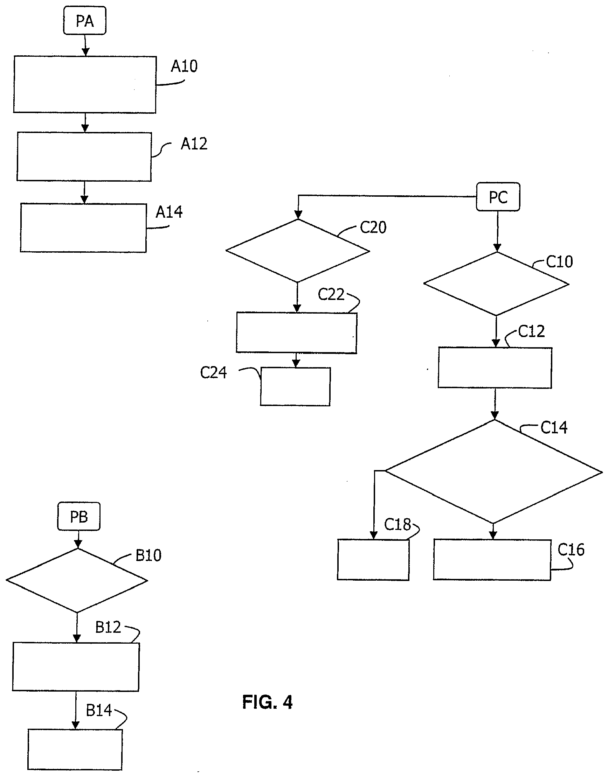

La mémoire morte 13 comporte un programme d'ordinateur conforme à l'invention, ce programme comportant des instructions pour exécuter les étapes du procédé de traitement d'un message d'annonce conforme à l'invention dont les principales étapes sont décrites, dans un mode de réalisation en référence aux figures 4 à 6.

Un état ou statut d'un noeud est défini par rapport au point d'accès. Dans le mode de réalisation décrit ici, il peut prendre trois valeurs :
- "R" ou statut "enregistré" : le noeud a effectué une phase d'enregistrement auprès du point d'accès. Cette phase d'enregistrement est décrite ultérieurement ;
- "I" ou statut "intermédiaire" le noeud a servi de relais lors d'une phase d'enregistrement d'un autre noeud ;
- "N" ou statut "nul" : dans les autres cas.

Chaque noeud comporte également une table de routage 15 dans laquelle il mémorise notamment son statut. A la mise sous tension, le statut d'un noeud est « N » (statut nul).

La **figure 3** représente de façon schématique le point d'accès 30, le point d'accès 30₁ étant identique. Il comporte un processeur 31, une mémoire vive de type RAM 32, une mémoire morte de type ROM 33. La mémoire morte 33 comporte un programme d'ordinateur conforme à l'invention, ce programme comportant des instructions pour exécuter les étapes du procédé de sélection conforme à l'invention, dont les principales étapes seront décrites, dans un mode particulier de réalisation, en référence aux figures 4 à 7.

Le point d'accès 30, 30₁ comporte également des moyens de télécommunication filaires 34 adaptés à communiquer avec un autre point d'accès, et une entité 3 du réseau Internet 2.

Le point d'accès 30, 30₁ comporte également des moyens de télécommunication sans fil 37 pour communiquer avec les noeuds du réseau ad hoc dans sa zone de couverture.

Le point d'accès 30, 30₁ comporte également une table de topologie 35 dans laquelle sont mémorisées les statuts de certains noeuds du réseau, formant une zone active et des informations nécessaires pour lui permettre d'identifier toutes les routes possibles entre deux noeuds enregistrés dans la table.

Par "zone active" au sens de l'invention, on entend un ensemble de noeuds comprenant au moins un noeud enregistré auprès du point d'accès (statut "R"), des noeuds intermédiaires (statut "I") qui servent de relais à au moins un noeud enregistré et des noeuds récepteurs d'un message d'annonce diffusé par le point d'accès. La méthode de détermination de ces derniers noeuds est détaillée par la suite.

Le point d'accès 30, 30₁ comporte également une table des connexions actives 36 dans le réseau ad hoc 5, 6.

En référence à la **figure 4****,** nous allons maintenant décrire comment s'effectue l'enregistrement d'un noeud auprès du point d'accès 30, dans un mode particulier de réalisation de l'invention.

L'enregistrement d'un noeud fait intervenir le noeud qui souhaite s'enregistrer, le point d'accès 30 et d'autres noeuds du réseau ad hoc 5 dès lors que le noeud qui souhaite s'enregistrer se trouve à plus d'un saut du point d'accès 30.

A la figure 4 on a représenté sous formes d'organigrammes, les processus PA (étapes A10 à A14), PB (étapes B10 à B14) et PC (étapes C10 à C24) respectivement mis en oeuvre par le noeud qui souhaite s'enregistrer, par le point d'accès 30 et par les autres noeuds du réseau lors de cet enregistrement.

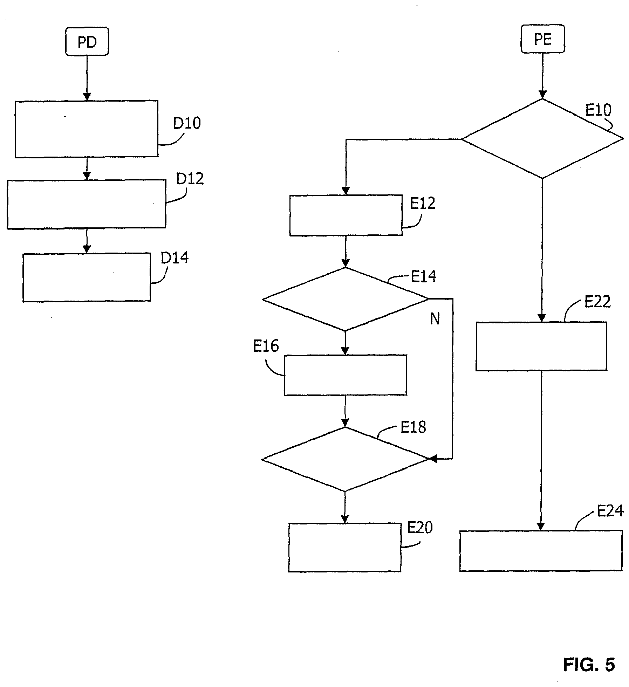

On suppose que le noeud qui souhaite s'enregistrer a déjà découvert le point d'accès 30. Ce mécanisme de découverte sera décrit ultérieurement en référence à la figure 5.

Au cours d'une étape A10, le noeud qui souhaite s'enregistrer diffuse une requête d'enregistrement RREQ (Route Request), cette requête ayant pour adresse source l'adresse ID_N de ce noeud, et pour adresse de destination, celle du point d'accès 30.

Si un autre noeud reçoit, au cours d'une étape C10, ce message RREQ, il met à jour, au cours d'une étape C12 sa table de routage 15 pour y renseigner une route entre lui et le noeud émetteur de la requête RREQ.

Puis, au cours d'un test C14, le noeud ayant reçu la requête RREQ détermine, par lecture de sa table de routage 15, s'il connaît déjà une route vers le point d'accès 30.

Si c'est le cas, le résultat du test C14 est positif, et le noeud transmet, au cours d'une étape C16, la requête RREQ au point d'accès 30 selon cette route.

Sinon le résultat du test C14 est négatif et le noeud diffuse, au cours d'une étape C18, la requête RREQ dans le réseau ad hoc 5.

Nous supposerons que le point d'accès 30 reçoit la requête RREQ au cours d'une étape B10.

Dans ce cas, il enregistre dans sa table de topologie 35, au cours d'une étape B12 dans un enregistrement associé au noeud émetteur de la requête RREQ :
- l'identifiant ID_N correspondant à l'adresse source de la requête RREQ;
- le premier noeud sur la route entre le point d'accès 30 et le noeud émetteur de la requête RREQ, c'est-à-dire le dernier noeud qui a transmis la requête RREQ ; et
- le statut « R » représentatif du fait que le noeud émetteur de la requête RREQ est enregistré auprès d'un point d'accès 30 et est actif au sens de ce document.

Un noeud enregistré auprès d'un point d'accès est un noeud actif au sens de ce document.

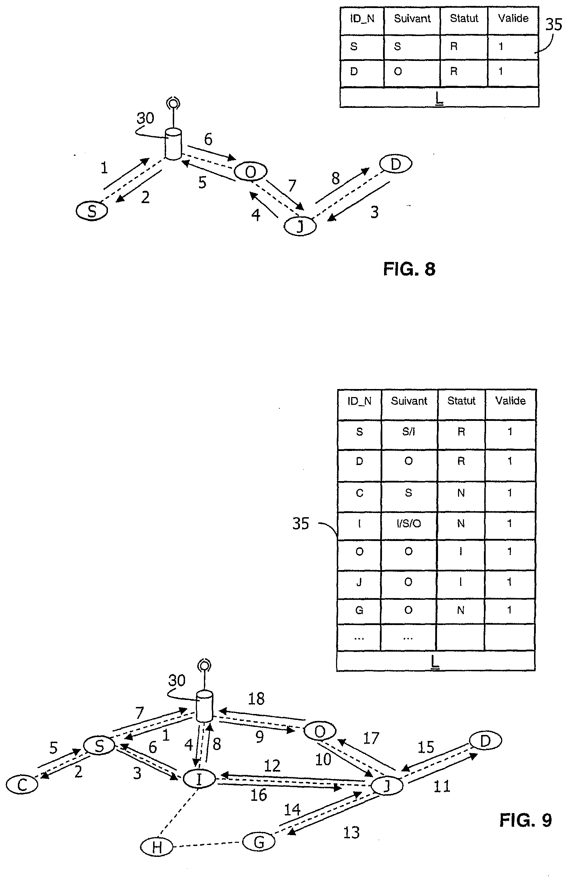

Ces informations sont respectivement enregistrées dans des colonnes « ID_N », « Suivant » et « Statut » représentées notamment à la figure 8.

Puis au cours d'une étape B14, le point d'accès 30 envoie un message RREP (Route Reply) à destination du noeud qu'il vient d'enregistrer, par l'intermédiaire du premier noeud sur la route entre le point d'accès 30 et le noeud de destination, ce message ayant pour adresse de destination l'adresse ID_N de ce noeud, et pour adresse source celle du point d'accès 30.

Si un noeud reçoit ce message RREP au cours d'une étape C20, il enregistre dans sa table de routage 15, au cours d'une étape C22, son statut « I » représentatif du fait qu'il est un noeud « intermédiaire » au sens de ce document, c'est-à-dire qu'il a contribué à l'acheminement d'une requête d'enregistrement d'un autre noeud.

Au cours d'une étape C24, il détermine par lecture de sa table de routage 15 l'identité du noeud lui permettant d'atteindre le noeud destinataire de ce message RREP et lui transmet ce message.

Le noeud à l'origine de la requête d'enregistrement RREQ reçoit finalement le message de réponse RREP au cours d'une étape A12.

Au cours d'une étape A14 il met à jour sa table de routage 15 et y enregistre son nouveau statut « R » représentatif du fait qu'il est enregistré dans la table de topologie 35 du point d'accès 30.

En référence à la **figure 5****,** nous allons maintenant décrire comment s'effectuent la découverte d'un point d'accès 30, 30₁ et la découverte de la topologie du réseau hybride 1, dans un mode particulier de réalisation de l'invention.

A la figure 5 on a représenté sous formes d'organigrammes, les processus PD (étapes D10 à D14) et PE (étapes E10 à E14) respectivement mis en oeuvre par le point d'accès 30, et par les noeuds du réseau pour effectuer ces découvertes.

Au cours d'une étape D10, le point d'accès 30 diffuse le message d'annonce GWADV (Gateway Advertisement) avec une profondeur d'un saut (TTL=1), ce message contenant l'identifiant du point d'accès 30.

L'étape E10 du processus PE est mise en oeuvre à chaque fois qu'un noeud reçoit un message.

Lorsqu'un noeud reçoit le message d'annonce GWADV, il met à jour sa table de routage 15 au cours d'une étape E12.

Puis, au cours d'un test E14, il détermine si son statut enregistré dans sa table de routage 15 est « R » (noeud enregistré), « I » (noeud intermédiaire) ou « N » (statut nul).

Si son statut est « R » ou « I », le test E14 est suivi par une étape E16 au cours de laquelle il diffuse le message d'annonce GWADV avec une profondeur d'un saut.

Puis au cours d'un test E18, le noeud détermine si son statut enregistré dans sa table de routage est « R » (noeud enregistré) ou « N » (statut nul). Un noeud de statut "N", ayant reçu le message d'annonce, est un noeud situé à un saut d'un noeud de statut "R" ou "I".

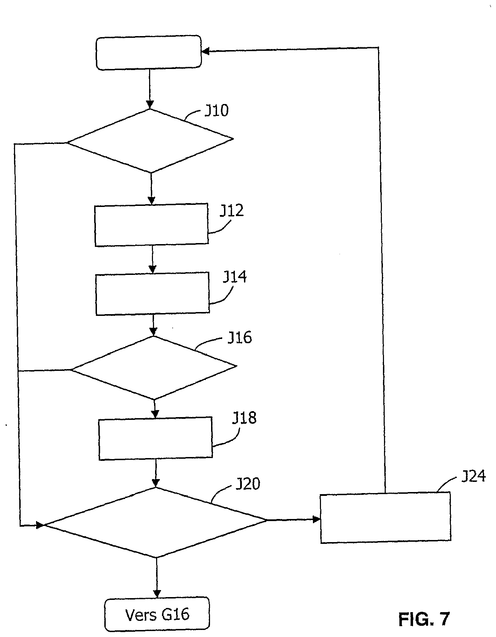

Si c'est le cas, le noeud envoie, au cours d'une étape E20, un message RREP-PA (PA : « path accumulation ») en direction du point d'accès 30, pour que celui-ci mette à jour sa table de topologie 35. On rappelle qu'un tel message permet d'accumuler une route de bout en bout entre un noeud source et un noeud destination. En pratique, tous les noeuds intermédiaires y insèrent leur propre identifiant. Dans le mode particulier de réalisation décrit ici, chacun des noeuds y insère également des informations de qualité de service (QoS_info) relatives au lien par lequel ils ont reçu ce message. Ces informations QoS_info sont utilisées pour la sélection des routes par les points d'accès comme décrit ultérieurement en référence à la figure 7.

Le message RREP-PA a pour adresse de destination celle du point d'accès 30.

Ainsi, seuls les noeuds de statut "R" enregistrés auprès du point d'accès 30 et les noeuds de statut "N" situés à un saut d'un noeud enregistré (statut "R" ou d'un noeud intermédiaire (statut "I") répondent au message d'annonce GWADV. On limite ainsi les messages de contrôle échangés entre les noeuds. De plus, la connaissance d'un environnement proche des noeuds intermédiaires et des noeuds enregistrés facilite la gestion de la mobilité des noeuds.

Si un noeud reçoit le message RREP-PA au cours de l'étape générale E10 de réception des messages, il met à jour sa table de routage 15 avec la route entre le noeud source de ce message et lui-même contenue dans ce message, au cours d'une étape E22, puis il transmet ce message au cours d'une étape E24.

Le point d'accès 30 reçoit le message RREP-PA au cours d'une étape D12.

Au cours d'une étape D14, le point d'accès 30 en extrait la route entre lui-même et le noeud source émetteur de ce message et met à jour sa table de topologie 35 avec cette route (champ « Suivant »), et le statut « R » ou « N » de cet émetteur. Les noeuds ayant répondu au message d'annonce GWADV sont actifs au sens de l'invention.

Au cours de cette même étape D14, le point d'accès enregistre dans la table de topologie 35, pour chacun des noeuds de la route comprise dans le message RREP-PA, le premier noeud permettant d'atteindre ce noeud.

Le point d'accès 30 enregistre aussi, dans une liste L de ladite table de topologie, la route extraite dudit message RREP-PA, entre le noeud émetteur de ce message et le point d'accès.

La liste L est notamment utilisée pour déterminer ultérieurement toutes les routes possibles entre le noeud source S et le noeud destination D.

Le mécanisme de découverte de point d'accès 30, 30₁ et de découverte de la topologie du réseau hybride 1 est répété périodiquement, à l'initiative de ces points d'accès par diffusion des messages d'annonce GWADV.

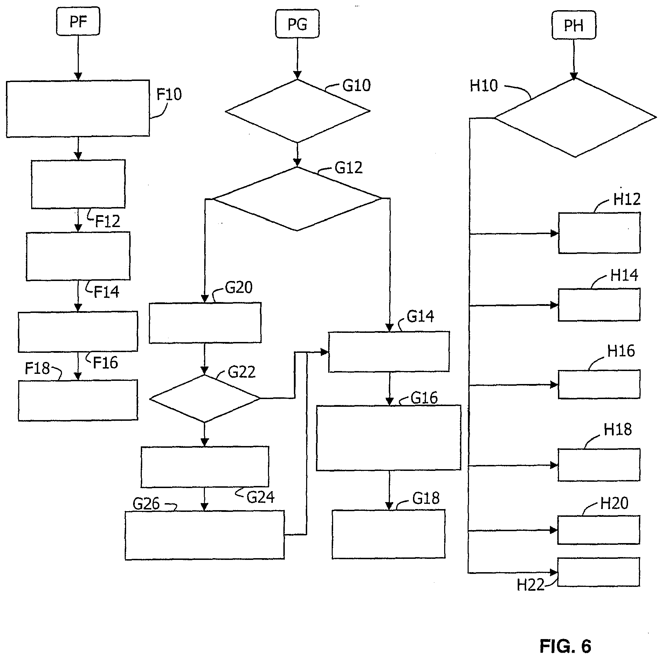

En référence aux **figures 6** **et** **7****,** nous allons maintenant décrire comment s'effectue la sélection d'une route entre le noeud source S et le noeud destination D, dans un mode particulier de réalisation de l'invention.

Ce mécanisme de découverte fait intervenir le noeud source S, le point d'accès 30 et éventuellement d'autres noeuds du réseau ou d'autres points d'accès 30₁.

A la figure 6, on a représenté sous formes d'organigrammes, les processus PF (étapes F10 à F18), PG (étapes G10 à G26) et PH (étapes H10 à H22) respectivement mis en oeuvre par le noeud source S, par le point d'accès 30 et par les autres noeuds du réseau dans cette découverte.

Au cours d'une étape F10, le noeud source S émet une requête RREQ à destination du point d'accès 30, cette requête ayant pour adresse source l'adresse du noeud source S, et pour adresse de destination, celle du point d'accès 30 et comprenant un champ QoS_champ de qualité de service et une adresse D du noeud de destination.

L'étape H10 du processus PH est mise en oeuvre à chaque fois qu'un noeud reçoit un message.

Lorsqu'un noeud reçoit le message RREQ au cours de cette étape H10, il le transmet vers le point d'accès 30 au cours d'une étape H12. En effet, le noeud source S s'étant normalement enregistré auprès du point d'accès 30, les noeuds intermédiaires entre le noeud source S et le point d'accès 30 connaissent déjà une route mémorisée dans leur table de routage 15 respective pour acheminer le message RREQ vers ce point d'accès 30.

Le point d'accès 30 reçoit le message RREQ au cours d'une étape G10.

Au cours d'un test G12, il vérifie si le noeud destination D est enregistré dans sa table de topologie 35.

Si c'est le cas, il sélectionne, au cours d'une étape générale G14, qui sera décrite ultérieurement en référence à la figure 7, une route entre le noeud source S et le noeud de destination D, parmi toutes les routes possibles entre ces noeuds qu'il peut déduire de la liste L de sa table de topologie 35.

Une fois que cette route est sélectionnée, le point d'accès 30 enrichit sa table des connexions actives 36 au cours d'une étape G16 avec :
- les informations obtenues dans la requête RREQ : adresse de la source S, de la destination D, informations de qualité de service QoS_info ; et avec
- la route sélectionnée à l'étape G14 entre ces noeuds S, D.

Au cours d'une étape G18, le point d'accès 30 envoie un message RREP au noeud source S, l'adresse source de ce message RREP est l'adresse du point d'accès 30 et son adresse destination celle de l'adresse source S. Ce message RREP comporte la route entre le noeud source S et le noeud destination D et des paramètres de qualité de service QoS_param effectivement disponibles sur cette route.

Lorsqu'un noeud reçoit ce message RREP au cours de l'étape générale H10 de réception des messages, il transfère ce message vers le noeud source S au cours d'une étape H14 en utilisant sa table de routage 15.

Le noeud source S reçoit le message RREP au cours d'une étape F12. Il extrait la route sélectionnée par le point d'accès et les paramètres de qualité de service QoS_param et met à jour sa table de routage au cours d'une étape F14 à l'aide de cette route.

Comme nous l'avions dit précédemment, il se peut que le point d'accès 30 ne connaisse pas le noeud destination D. Dans ce cas le résultat du test G12 est négatif.

Dans un autre mode de réalisation particulier, le point d'accès 30 envoie un message au noeud source S pour lui indiquer que le noeud destination D est inaccessible.

Dans le mode de réalisation décrit ici, le test G12 est suivi, lorsque son résultat est négatif, par une étape G20 au cours de laquelle le point d'accès 30 recherche le noeud de destination D auprès des autres points d'accès 30₁ du réseau hybride 1.

Pour cela il peut utiliser un mécanisme de recherche par diffusion ou "ring-based search" limité à ces points d'accès, par exemple par la mise en oeuvre du mécanisme défini dans le document RFC 3561 ("Request For Comments") du protocole de routage AOPV (pour Ad hoc On-Demand Distance Vector).

Au cours d'un test G22 le point d'accès analyse le résultat de cette première recherche. Si cette recherche est fructueuse, le test G22 est suivi par l'étape générale G14 de sélection de route déjà décrite.

En revanche, si la première recherche échoue, le test G22 est suivi par une étape G24 au cours de laquelle le point d'accès 30 initie un mécanisme de recherche par diffusion ou "ring-based search" dans le réseau ad hoc. Pour cela il diffuse un message RREQ dans lequel un indicateur S (Search) est positionné à 1. L'adresse source de ce message est l'adresse du point d'accès 30 et l'adresse de destination est l'adresse du noeud de destination D recherché. Dans le mode de réalisation décrit ici, la profondeur TTL de ce message RREQ est égale au rayon du réseau ad hoc 5. Par "rayon" du réseau ad hoc, on entend le nombre maximum de sauts entre le point d'accès et un noeud du réseau. Les mécanismes connus de l'art antérieur recherchent le noeud sur une zone correspondant au diamètre. L'invention tire ainsi avantage de la position centrale du point d'accès et limite l'encombrement du réseau ad hoc par les messages de recherche.

Lorsqu'un noeud reçoit ce message RREQ avec l'indicateur S positionné à 1 au cours de l'étape générale H10 de réception des messages, il met à jour la route par défaut vers le point d'accès 30 dans sa table de routage 15 au cours d'une étape H18. Si le noeud est destinataire de ce message, il prépare un message RREP-PA à destination du point d'accès 30, le long de la route par défaut. Au cours de cette même étape H18, le noeud initie le mécanisme d'enregistrement précédemment décrit en référence à la figure 4 en mettant en oeuvre le processus PA. Si le noeud n'est pas destinataire du message RREQ, il le diffuse.

Lorsqu'un noeud reçoit le message RREP-PA au cours de l'étape générale H10 de réception des messages, il y insère sa propre adresse au cours d'une étape H16, et le transfère vers le point d'accès 30, comme cela est décrit en référence à l'étape E22.

Le point d'accès reçoit le message RREP-PA au cours d'une étape G26. Il en extrait notamment la route vers le noeud de destination D et met à jour sa table de topologie 35 comme décrit en référence à l'étape D14. Le processus PG se poursuit alors par l'étape générale G14 de sélection de route déjà mentionnée et qui va maintenant être décrite précédemment en référence à la figure 7.

Dans le mode de réalisation décrit ici, le noeud source est enregistré au préalable auprès du point d'accès.

En variante, des noeuds ayant un statut "I" ou "N", connaissant une route vers le point d'accès 30, peuvent émettre le message RREQ à destination du point d'accès sans s'enregistrer au préalable. La réception du message RREQ modifie leur statut de "I" ou "N" à "R".

La **figure 7** décrit un mécanisme de sélection de route mis en oeuvre par le point d'accès 30 dans un mode particulier de réalisation de l'invention. Il détaille l'étape G14.

Dans le mode de réalisation décrit ici, ce mécanisme de sélection est aussi mis en oeuvre quand le point d'accès détermine qu'une nouvelle route est disponible.

Au cours d'un test J10, le point d'accès 30 détermine, à partir de sa table de topologie 35, s'il existe plusieurs routes possibles entre le noeud source S et le noeud destination D.

Si c'est le cas, le résultat du test J10 est positif et ce test est suivi par une étape J12 au cours de laquelle le point d'accès 30 calcule les paramètres QoS_param de qualité de service, à savoir par exemple des délais, des informations de bande passante, des taux de perte sur chacune des routes possibles. Ces paramètres sont calculés à partir des informations de qualité de service (QoS_info) reçues par le point d'accès 30 dans les messages RREP-PA.

Au cours d'une étape J14, le point d'accès 30 vérifie si les paramètres QoS_param sont compatibles avec les exigences contenues dans le champ QoS_champ de qualité de service de la requête émise à l'étape F10 par la source S pour obtenir une route. Il élimine ainsi les routes incompatibles avec les exigences de l'application qui utilisera la route sélectionnée par le point d'accès.

Au cours d'un test J16, le point d'accès 30 détermine si plusieurs routes sont encore envisageables.

Si tel est le cas, le résultat du test J16 est positif. Ce test est alors suivi par une étape J18 au cours de laquelle le point d'accès analyse la stabilité de ces routes. A cet effet, le point d'accès 30 consulte une base d'historique du comportement de ces routes, et retient les routes les plus stables. Si le point d'accès 30 est surchargé, il peut aussi choisir une route qui ne passe pas par ce point d'accès. Une telle base d'historique peut être localisée au point d'accès 30 ou centralisée dans le réseau Internet 2 et partagée par plusieurs points d'accès.

Le point d'accès 30 peut également prendre en compte un profil de l'utilisateur du noeud source.

Lorsqu'il ne reste plus qu'une route, le point d'accès la considère comme étant la route à sélectionner entre le noeud source S et le noeud destination D.

Au cours d'un test J20, le point d'accès 30 détermine si une route est déjà établie entre le noeud source S et le noeud destination D.

Si ce n'est pas le cas, le résultat du test J20 est négatif et on exécute les étapes G16 de mise à jour la table 36 des connexions actives et G18 d'envoi du message RREP au noeud source S déjà décrites pour lui donner les paramètres de la route sélectionnée.

En revanche, si une route est déjà établie entre le noeud source S et le noeud destination D, il convient de déterminer, au cours d'une étape J24, s'il est nécessaire de remplacer cette route par la nouvelle route sélectionnée. Dans l'exemple de réalisation décrit, on ne change de route que si un gain significatif prédéterminé peut être obtenu en termes de qualité de service.

Nous allons maintenant décrire comment la route est établie entre le noeud source S et le noeud destination D.

Après avoir extrait la route sélectionnée vers le noeud destination D (étape F14), le noeud source S prépare, au cours d'une étape F16, un message RREQ dont l'adresse source est l'adresse du noeud source S et l'adresse de destination celle du noeud destination D. Ce message contient la route sélectionnée de bout en bout et un indicateur RE (Route Establishment) positionné à 1.

Le noeud source envoie ce message au cours de la même étape F16 le long de la route sélectionnée.

Lorsqu'un noeud reçoit ce message RREQ avec l'indicateur RE positionné à 1 au cours de l'étape générale H10 de réception des messages, deux cas se présentent, ces deux cas étant traités au cours d'une étape H20.

Si le noeud qui reçoit ce message est le noeud destination D, il y répond en envoyant au noeud source S par un message RREP dans lequel l'adresse source est l'adresse du noeud destination D et l'adresse de destination celle du noeud source S, l'indicateur RE étant positionné à 1.

Si le noeud qui reçoit le message RREQ n'est pas le noeud destination D, il met à jour sa table de routage 15 en fonction de la route de bout en bout contenue dans le message RREQ. Puis il transmet le message RREQ vers le noeud suivant de la route sélectionnée pour qu'il soit acheminé vers le noeud destination D.

Lorsqu'un noeud reçoit le message RREP avec l'indicateur RE positionné à 1 au cours de l'étape générale H10 de réception des messages, il met à jour sa table de routage 15 au cours d'une étape H22, puis il transfère ce message en consultant sa table de routage à destination du noeud source S.

Le noeud source S reçoit finalement le message RREP avec l'indicateur RE positionné à 1 au cours d'une étape F18.

Il considère alors que la route sélectionnée est établie et il peut commencer à émettre des données sur cette route.

Le noeud source S peut également adapter les paramètres de l'application en fonction des paramètres de qualité de service QoS_param reçus du point d'accès 30 à l'étape F14.

En référence aux figures 8 à 10, nous allons maintenant décrire l'état des tables de topologie 35 du point d'accès 30 à différents stades du procédé de sélection selon l'invention dans un exemple particulier.

A la **figure 8**, on a représenté sous forme de flèches, des messages échangés au cours de l'enregistrement des noeuds source S et destination D auprès du point d'accès 30 dans le réseau hybride de la figure 1.

Tout d'abord, le noeud source S diffuse un message RREQ 1 (étape A10). Le point d'accès 30 enregistre le statut « R » du noeud source S dans sa table de topologie 35. Etant donné que le noeud source S est à un saut du point d'accès 30, l'identifiant du noeud S est enregistré dans la colonne « Suivant » de cette table. Le point d'accès 30 répond au message RREQ par l'envoi d'un message RREP 2 (étape B14).

Nous supposerons en parallèle que le noeud destination D envoie également un message RREQ 3, ce message étant relayé par le noeud J (message RREQ 4), puis par le noeud O (message RREQ 5) jusqu'au point d'accès 30.

Le point d'accès 30 enregistre le statut « R » du noeud D dans sa table de topologie 35 et l'identifiant du noeud « O » dans la colonne « Suivant ». Puis le point d'accès 30 répond au message RREQ 5 par l'envoi d'un message RREP 6 relayé par le noeud O (message RREP 7) puis par le noeud J (message RREP 8) jusqu'au noeud destination D.

Sur réception du message RREQ 5 (respectivement 6), le noeud O (respectivement J) enregistre son statut « I » de noeud intermédiaire dans sa table de routage 15.

Et sur réception du message RREQ 2 (respectivement 8), le noeud S (respectivement D) enregistre son statut « R » de noeud enregistré dans sa table de routage 15.

Dans l'exemple décrit ici, la table de topologie 35 comporte une colonne "valide" représentative de la validité d'une entrée dans cette table. La table de topologie doit en effet être rafraîchie régulièrement pour refléter la topologie réelle du réseau, les noeuds étant susceptibles de se déplacer et/ou de quitter le réseau. Si une information n'est pas rafraîchie pendant une durée prédéterminée, elle devient obsolète et son état change dans la colonne "valide".

A **la** **figure 9****,** on a représenté des messages échangés au cours d'une phase de découverte de la topologie du réseau hybride 1.

Les messages 1, 2, 3, 4, 9, 10, 11, 12 et 13 sont des messages d'annonce GWADV diffusés par le point d'accès 30 avec une profondeur d'un saut et relayés par les noeuds S, O et J qui ont un statut « R » ou « I » également avec une profondeur d'un saut.

Les messages 7, 5, 6, 8, 15, 16 et 14 sont des messages de type RREP-PA en réponse aux messages GWADV précités. Le message 17 correspond également à des messages RREP-PA correspondant aux messages 14, 15 et 16 retransmis par le noeud J en y adjoignant son identité. Le message 18 correspond à ces messages retransmis par le noeud O en y adjoignant son identité.

Dans l'exemple décrit ici, la table de topologie 35 comporte une colonne "valide" représentative de la validité d'une entrée dans cette table. La table de topologie doit en effet être rafraîchie régulièrement pour refléter la topologie réelle du réseau, les noeuds étant susceptibles de se déplacer et/ou de quitter le réseau. Si une information n'est pas rafraîchie pendant une durée prédéterminée, elle devient obsolète et son état change dans la colonne "valide".

La table de topologie 35 du point d'accès 30 mémorise l'état « N », « R » ou « I » des noeuds connus de ce point d'accès et dans la colonne « Suivant » le premier noeud dans chacune des routes connues vers ces noeuds.

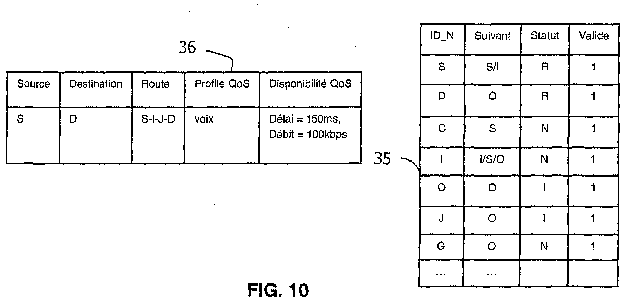

La **figure 10** illustre un mécanisme de sélection de route conforme à l'invention, entre le noeud source S et le noeud destination D.

Les routes possibles entre les noeuds S et D pouvant être déduites de la table de topologie 35 sont :
- la route 1 : S-30-O-J-D ; et
- la route 2 : S-I-J-D ; et
- la route 3 : S-I-30-O-J-D.

Parmi ces routes, seule la route 2 ne passe pas par le point d'accès 30.

Le point d'accès 30 calcule des paramètres de qualité de service QoS_param pour chacune des routes 1 à 3 et obtient le résultat suivant :

| Route | Nombre de sauts | Délai | Taux erreur | Débit |
|---|---|---|---|---|
| 1 | 4 | 200ms | 1/1000 | 300 kbps |
| 2 | 3 | 150ms | 1/1000 | 100 kbps |
| 3 | 5 | 250ms | 1/1000 | 250 kbps |

Le point d'accès détermine la ou les route(s) qui présentent les meilleures caractéristiques au vu des exigences de qualité de service requises pour l'application annoncée par le noeud source S dans sa requête.

On suppose que l'application est de type voix et que le paramètre de délai est très important. Le point d'accès 30 rejette la route 3 pour qui présente un délai excessif de 250 ms.

Puis, le point d'accès 30 consulte la base d'historique du comportement des routes 1 et 2 et y apprend que ces routes sont stables.

Etant donné que la route 1 passe par le point d'accès 30 et que celui-ci est chargé, il donne la priorité à la route 2.

Le point d'accès 30 met à jour sa table des connexions actives 36 avec les paramètres de la route 2.

La route sélectionnée 2 est envoyée au noeud S dans un message RREP, ce message contenant les paramètres QoS_param de qualité de service de la route 2.

Sur réception de ce message le noeud S adapte les paramètres de qualité de service de l'application voix en choisissant un codeur de voix efficace au débit de 100 kbps.

Dans le mode de réalisation qui vient d'être décrit, le programme d'ordinateur conforme à l'invention, mémorisé dans la mémoire morte 33 des points d'accès 30, 30₁ comporte des instructions pour mettre en oeuvre :
- le processus PB lors de l'enregistrement d'un noeud ;
- le processus PD pour la découverte de ces points d'accès et de la topologie du réseau hybride ;
- le processus PG et l'algorithme de la figure 7 pour la sélection d'une route.

Dans le mode de réalisation qui vient d'être décrit, le programme d'ordinateur conforme à l'invention, mémorisé dans la mémoire morte 13 des noeuds 10 comporte des instructions pour mettre en oeuvre :
- le processus PA lors de l'enregistrement d'un noeud ;
- le processus PE pour la découverte de ces points d'accès et de la topologie du réseau hybride.

## Revendications

1. Procédé de traitement d'un message d'annonce (GWADV) diffusé (D10), dans un réseau de télécommunications hybride (1), par un point d'accès (30), ce procédé étant mis en oeuvre par un noeud dudit réseau (1) après réception dudit message d'annonce (GWADV), ledit message d'annonce (GWADV) ayant éventuellement été relayé par un autre noeud dudit réseau (1), ce procédé comportant :
- une étape (E20) d'envoi, par ledit noeud et à destination dudit point d'accès, d'un message de réponse (RREP-PA) audit message d'annonce (GWADV);
- une première étape de vérification (E18) au cours de laquelle ledit noeud vérifie qu'il a un statut (R, N) représentatif du fait qu'il n'a pas contribué à l'acheminement d'une requête (RREQ) d'enregistrement, les requêtes d'enregistrement étant envoyées par les noeuds du réseau afin de s'enregistrer auprès dudit point d'accès; et en ce que
- ladite étape d'envoi (E20) est effectuée uniquement en cas de succès de ladite première étape de vérification (E18).

2. Procédé de traitement d'un message d'annonce (GWADV) selon la revendication 1, comportant :
- une deuxième étape de vérification (E14), antérieure à ladite première étape de vérification (E18), au cours de laquelle ledit noeud mettant en oeuvre ce procédé vérifie qu'il a un statut (R, I) représentatif du fait qu'il est enregistré auprès dudit point d'accès (30) ou du fait qu'il a contribué à l'acheminement d'une dite requête (RREQ) d'enregistrement vers ledit point d'accès (30) ; et, en cas de succès de ladite deuxième étape de vérification (E14) :
- une étape (E16) de retransmission dudit message d'annonce (GWADV) vers au moins un noeud dudit réseau en tenant compte d'une profondeur de diffusion (TTL) comprise dans ledit message d'annonce (GWADV).

3. Programme d'ordinateur comportant des instructions pour l'exécution des étapes du procédé de traitement selon la revendication 1 ou 2 lorsque ledit programme est exécuté par un ordinateur (10).

4. Support d'enregistrement (13) lisible par un ordinateur (10) sur lequel est enregistré un programme d'ordinateur comprenant des instructions pour l'exécution des étapes du procédé de traitement selon la revendication 1 ou 2.

5. Noeud susceptible d'être utilisé dans un réseau de télécommunications hybride (1) comportant un point d'accès (30), ledit noeud comportant :
- des moyens (14) de réception d'un message d'annonce (GWADV) diffusé (D10) par ledit point d'accès (30), éventuellement relayé par un autre noeud dudit réseau (1) ;
- des moyens (11) pour vérifier si le noeud a un statut (R, N) représentatif du fait qu'il n'a pas contribué à l'acheminement d'une requête (RREQ) d'enregistrement envoyée par un premier noeud du réseau pour s'enregistrer auprès dudit point d'accès auprès ; et
- des moyens (14) d'envoi d'un message de réponse (RREP-PA) audit message d'annonce (GWADV) à destination dudit point d'accès en cas de succès de ladite vérification.

6. Procédé de sélection d'une route entre un noeud source (S) et un noeud destination (D) dans un réseau de télécommunication hybride (1), ledit procédé comportant :
- une étape (C12, C14) d'enregistrement dans une table de topologie (35) d'un point d'accès (30), pour au moins un noeud dudit réseau, d'un identifiant (ID_N) de ce noeud et d'une route entre ledit noeud et ledit point d'accès (30), sur réception d'une requête d'enregistrement (RREQ) émise (A10) par ledit noeud, ladite étape étant mise en oeuvre par ledit point d'accès (30);
- une étape (D12) de réception, par ledit point d'accès, de messages (RREP-PA) émis par des noeuds dudit réseau (1) en réponse à un message d'annonce (GWADV) diffusé (D10) par ledit point d'accès (30), lesdits messages reçus (RREP-PA) comportant une route entre le noeud émetteur du message et ledit point d'accès (30), un dit message reçu (RREP-PA) n'étant envoyé par un dit noeud uniquement dans le cas où ce noeud a vérifié qu'il avait un statut (R, N) représentatif du fait qu'il n'a pas contribué à l'acheminement d'une dite requête (RREQ) d'enregistrement; et
- une étape (G14) de sélection, par ledit point d'accès, d'une route parmi toutes les routes possibles entre ledit noeud source (S) et ledit noeud destination (D) déterminées à partir desdits messages de réponse reçus (RREP-PA).

7. Procédé de sélection selon la revendication 6, comportant une étape (D14) au cours de laquelle ledit point d'accès (30) enregistre dans ladite table de topologie (35) une route extraite dudit message reçu (RREP-PA), entre le noeud émetteur de ce message (RREP-PA) et ledit point d'accès (30).

8. Procédé de sélection selon la revendication 6 ou 7, comportant que ledit message d'annonce (GWADV) est diffusé par ledit point d'accès (30) avec une profondeur d'un saut et relayé dans ledit réseau 1 par les noeuds dudit réseau ayant un statut prédéterminé (R, I).

9. Procédé de sélection selon l'une quelconque des revendications 6 à 8, comprenant en outre une première étape (G20) de recherche dudit noeud destination (D) auprès d'au moins un autre point d'accès (30₁) si ledit point d'accès ne connaît pas ledit noeud de destination (D).

10. Procédé de sélection selon la revendication 9, comportant en cas d'échec de ladite première étape (G20) de recherche, une deuxième étape (G24) de recherche dudit noeud destination (D) dans le réseau (1) par un mécanisme de recherche par diffusion.

11. Procédé de sélection selon l'une quelconque des revendications 6 à 10, comportant que ladite étape (G14) de sélection de route prend au moins en compte :
- le nombre de sauts entre ledit noeud source (S) et ledit noeud destination (D) dans chacune desdites routes possibles ; ou
- le fait qu'une dite route possible passe ou non par ledit point d'accès (30) ; ou
- une qualité de service sur chacune desdites routes possibles évaluée en fonction d'un type application compris dans ladite requête (RREQ) d'obtention de route.

12. Programme d'ordinateur comportant des instructions pour l'exécution des étapes du procédé de sélection selon l'une quelconque des revendications 6 à 11 lorsque ledit programme est exécuté par un ordinateur (30).

13. Support d'enregistrement (33) lisible par un ordinateur (30) sur lequel est enregistré un programme d'ordinateur comprenant des instructions pour l'exécution des étapes du procédé de sélection selon l'une quelconque des revendications 6 à 11.

14. Système comportant, dans un réseau de télécommunications hybride comportant au moins un point d'accès (30) et au moins un noeud,
- ledit noeud comportant :
- des moyens (14) de réception d'un message d'annonce (GWADV) diffusé (D10) par ledit point d'accès (30), éventuellement relayé par un autre noeud dudit réseau (1) ;
- des moyens (11) pour vérifier s'il a un statut (R, N) représentatif du fait qu'il n'a pas contribué à l'acheminement d'une requête (RREQ) d'enregistrement, les requêtes d'enregistrement étant envoyées par les noeuds du réseau afin de s'enregistrer auprès dudit point d'accès ; et
- des moyens (14) d'envoi d'un message de réponse (RREP-PA) audit message d'annonce (GWADV) à destination dudit point d'accès en cas de succès de ladite vérification ;
- ledit point d'accès comportant des moyens d'enregistrement dans une table de topologie (35), sur réception d'une requête d'enregistrement (RREQ) émise (A10) par un noeud d'un identifiant (ID_N) de ce noeud et d'une route entre ledit noeud et ledit point d'accès (30), ;
- ledit point d'accès comportant :
des moyens de réception des messages (RREP-PA) émis par des noeuds dudit réseau (1) en réponse audit message d'annonce (GWADV) ces messages (RREP-PA) comportant une route entre ce noeud émetteur et ledit point d'accès (30) ;
- des moyens d'enregistrement dans ladite table de topologie (35) de ladite route, en association avec un identifiant (ID_N) dudit noeud émetteur ;
- des moyens de réception d'une requête (RREQ) émise (F10) par un noeud source (S) pour obtenir une route vers ledit noeud destination (D) ;
- des moyens de sélection d'une route parmi toutes les routes possibles entre ledit noeud source (S) et ledit noeud destination (D) déterminées à partir desdits messages de réponse reçus (RREP-PA); et
- des moyens d'envoi d'un message (RREP) comportant ladite route sélectionnée audit noeud source (S).

15. Réseau hybride (1) comportant un système selon la revendication 14.

## Patentansprüche

1. Verfahren zur Bearbeitung einer Ankündigungsnachricht (GWADV), die in einem Hybridtelekommunikationsnetzwerk (1) durch einen Zugangspunkt (30) verbreitet wird (D10), wobei dieses Verfahren durch einen Konten des Netzwerks (1) nach Empfang der Ankündigungsnachricht (GWADV) eingesetzt wird, wobei die Ankündigungsnachricht (GWADV) eventuell durch einen anderen Konten des Netzwerks (1) weitergeleitet wurde, wobei dieses Verfahren umfasst:
- einen Schritt (E20) des Sendens durch den Knoten und in Richtung des Zugangspunkts einer Antwortnachricht (RREP-PA) auf die Ankündigungsnachricht (GWADV);
- einen ersten Überprüfungsschritt (E18), während dessen der Knoten überprüft, ob er einen Status (R, N) hat, der für die Tatsache repräsentativ ist, dass er nicht zu der Weiterleitung einer Registrieranfrage (RREQ) beigetragen hat, wobei die Registrieranfragen von den Knoten des Netzwerks gesandt werden, um sich bei dem Zugangspunkt zu registrieren; und wobei
- der Sendeschritt (E20) nur im Falle einer erfolgreichen Durchführung des ersten Überprüfungsschrittes (E18) erfolgt.

2. Verfahren zur Bearbeitung einer Ankündigungsnachricht (GWADV) nach Anspruch 1, umfassend:
- einen zweiten Überprüfungsschritt (E14) vor dem ersten Überprüfungsschritt (E18), während dessen der Knoten, der dieses Verfahren einsetzt, überprüft, ob er einen Status (R, I) hat, der für die Tatsache repräsentativ ist, dass er bei dem Zugangspunkt (30) registriert ist, oder dass er zu der Weiterleitung einer Registrieranfrage (RREQ) an den Zugangspunkt (30) beigetragen hat; und im Falle einer erfolgreichen Durchführung des zweiten Überprüfungsschrittes (E14);
- einen Schritt (E16) der Rückübertragung der Ankündigungsnachricht (GWADV) zu mindestens einem Knoten des Netzwerks unter Berücksichtigung einer Diffusionstiefe (TTL), die in der Ankündigungsnachricht (GWADV) enthalten ist.

3. Computerprogramm, umfassend Befehle für die Ausführung der Schritte des Bearbeitungsverfahrens nach Anspruch 1 oder 2, wenn das Programm von einem Computer (10) ausgeführt wird.

4. Aufzeichnungsträger (13), der von einem Computer (10) lesbar ist, auf dem ein Computerprogramm aufgezeichnet ist, umfassend Befehle für die Ausführung der Schritte des Bearbeitungsverfahrens nach Anspruch 1 oder 2.

5. Knoten, der geeignet ist, in einem Hybridtelekommunikationsnetzwerk (1), umfassend einen Zugangspunkt (30) verwendet zu werden, wobei der Knoten umfasst:
- Mittel (14) zum Empfang einer Ankündigungsnachricht (GWADV), die vom Zugangspunkt (30) verbreitet wird (D10), eventuell von einem anderen Knoten des Netzwerks (1) weitergeleitet wird;
- Mittel (11), um zu überprüfen, ob der Knoten einen Status (R, N) hat, der für die Tatsache repräsentativ ist, dass er nicht zu der Weiterleitung einer Registrieranfrage (RREQ) beigetragen hat, die von einem ersten Knoten des Netzwerks gesandt wird, um sich bei dem Zugangspunkt zu registrieren bei dem; und
- Mittel (14) zum Senden einer Antwortnachricht (RREP-PA) auf die Ankündigungsnachricht (GWADV) in Richtung des Zugangspunktes im Falle einer erfolgreichen Durchführung der Überprüfung.

6. Verfahren zur Auswahl einer Route zwischen einem Ausgangsknoten (S) und einem Bestimmungsknoten (D) in einem Hybridtelekommunikationsnetzwerk (1), wobei das Verfahren umfasst:
- einen Schritt (C12, C14) der Registrierung in einer Topologietabelle (35) eines Zugangspunktes (30) für mindestens einen Knoten des Netzwerks, eines Identifikators (ID_N) dieses Knotens und einer Route zwischen dem Knoten und dem Zugangspunkt (30) bei Empfang einer von dem Knoten gesandten (A10) Registrieranfrage (RREQ), wobei der Schritt von dem Zugangspunkt (30) eingesetzt wird;
- einen Schritt (D12) des Empfangs durch den Zugangspunkt von Nachrichten (RREP-PA), die von Knoten des Netzwerks (1) als Antwort auf eine Ankündigungsnachricht (GWADV), die vom Zugangspunkt (30) verbreitet wird (D10), gesandt werden, wobei die empfangenen Nachrichten (RREP-PA) eine Route zwischen dem die Nachricht sendenden Knoten und dem Zugangspunkt (30) umfassen, wobei eine empfangene Nachricht (RREP-PA) von einem Knoten nur dann gesandt wird, wenn dieser Knoten überprüft hat, ob er einen Status (R, N) hatte, der für die Tatsache repräsentativ ist, dass er nicht zu der Weiterleitung einer Registrieranfrage (RREQ) beigetragen hat; und
- einen Schritt (G14) der Auswahl durch den Zugangspunkt einer Route unter allen möglichen Routen zwischen dem Ausgangsknoten (S) und dem Bestimmungsknoten (D), die auf Basis der empfangenen Antwortnachrichten (RREP-PA) bestimmt wurden.

7. Auswahlverfahren nach Anspruch 6, umfassend einen Schritt (D14), während dessen der Zugangspunkt (30) in der Topologietabelle (35) eine der empfangenen Nachricht (RREP-PA) entnommene Route zwischen dem Sendeknoten dieser Nachricht (RREP-PA) und dem Zugangspunkt (30) registriert.

8. Auswahlverfahren nach Anspruch 6 oder 7, umfassend die Tatsache, dass die Ankündigungsnachricht (GWADV) vom Zugangspunkt (30) mit einer Tiefe eines Sprungs verbreitet und in dem Netzwerk (1) durch die Knoten des Netzwerks, die einen vorbestimmten Status (R, I) haben, weitergeleitet wird.

9. Auswahlverfahren nach einem der Ansprüche 6 bis 8, ferner umfassend einen ersten Schritt (G20) der Suche des Bestimmungsknotens (D) bei mindestens einem anderen Zugangspunkt (30₁), wenn der Zugangspunkt den Bestimmungspunkt (D) nicht kennt.

10. Auswahlverfahren nach Anspruch 9, umfassend im Falle einer nicht erfolgreichen Durchführung des ersten Suchschritts (G20) einen zweiten Schritt (G24) der Suche des Bestimmungsknotens (D) in dem Netzwerk (1) durch einen Suchmechanismus durch Diffusion.

11. Auswahlverfahren nach einem der Ansprüche 6 bis 10, umfassend die Tatsache, dass der Schritt (G14) der Routenauswahl mindestens berücksichtigt:
- die Anzahl von Sprüngen zwischen dem Anfangsknoten (S) und dem Bestimmungsknoten (D) in jeder der möglichen Routen; oder
- die Tatsache, dass eine mögliche Route durch den Zugangspunkt (30) verläuft oder nicht; oder
- eine Dienstgüte auf jeder der möglichen Routen, die in Abhängigkeit von einem in der Routenanfrage (RREQ) enthaltenen Anwendungstyp bewertet wird.

12. Computerprogramm, umfassend Befehle für die Ausführung der Schritte des Auswahlverfahrens nach einem der Ansprüche 6 bis 11, wenn das Programm von einem Computer (30) ausgeführt wird.

13. Aufzeichnungsträger (33), der von einem Computer (30) lesbar ist, auf dem ein Computerprogramm aufgezeichnet ist, umfassend Befehle für die Ausführung der Schritte des Auswahlverfahrens nach einem der Ansprüche 6 bis 11.

14. System, umfassend in einem Hybridtelekommunikationsnetzwerk mindestens einen Zugangspunkt (30) und mindestens einen Knoten,
- wobei der Knoten umfasst:
- Mittel (14) zum Empfang einer Ankündigungsnachricht (GWADV), die vom Zugangspunkt (30) verbreitet wird (D10), eventuell von einem anderen Knoten des Netzwerks (1) weitergeleitet wird;
- Mittel (11), um zu überprüfen, ob er einen Status (R, N) hat, der für die Tatsache repräsentativ ist, dass er nicht zu der Weiterleitung einer Registrieranfrage (RREQ) beigetragen hat, wobei die Registrieranfragen von einem ersten Knoten des Netzwerks gesandt werden, um sich bei dem Zugangspunkt zu registrieren; und
- Mittel (14) zum Senden einer Antwortnachricht (RREP-PA) auf die Ankündigungsnachricht (GWADV) in Richtung des Zugangspunktes im Falle einer erfolgreichen Durchführung der Überprüfung;
- wobei der Zugangspunkt Mittel zur Registrierung in einer Topologietabelle (35) eines Identifikators (ID_N) dieses Knotens und einer Route zwischen dem Knoten und dem Zugangspunkt (30) bei Empfang einer von einem Knoten gesandten (A10) Registrieranfrage (RREQ) umfasst;
- wobei der Zugangspunkt umfasst:
- Mittel zum Empfang der Nachrichten (RREP-PA), die von Knoten des Netzwerks (1) als Antwort auf die Ankündigungsnachricht (GWADV) dieser Nachrichten (RREP-PA) gesandt werden, umfassend eine Route zwischen diesem Sendeknoten und dem Zugangspunkt (30);
- Mittel zur Aufzeichnung der Route in der Topologietabelle (35) in Verbindung mit einem Identifikator (ID_N) des Sendeknotens;
- Mittel zum Empfang einer Anfrage (RREQ), die von einem Ausgangsknoten (S) gesandt wird (F10), um eine Route zu dem Bestimmungsknoten (D) zu erhalten;
- Mittel zur Auswahl einer Route unter allen möglichen Routen zwischen dem Ausgangsknoten (S) und dem Bestimmungsknoten (D), die auf Basis der empfangenen Antwortnachrichten (RREP-PA) bestimmt wurden; und
- Mittel zum Senden einer Nachricht (RREP), umfassend die ausgewählte Route, an den Ausgangsknoten (S).

15. Hybridnetzwerk (1), umfassend ein System nach Anspruch 14.

## Claims

1. Method for processing an advertisement message (GWADV) broadcast (D10), in a hybrid telecommunications network (1), by an access point (30), this method being implemented by a node of said network (1) after receipt of said advertisement message (GWADV), said advertisement message (GWADV) having optionally been relayed by another node of said network (1), this method comprising:
- a step (E20) of dispatching, by said node and destined for said access point, a message in response (RREP-PA) to said advertisement message (GWADV);
- a first verification step (E18) in the course of which said node verifies that it has a status (R, N) representative of the fact that it has not contributed to the forwarding of a registration request (RREQ), the registration requests being dispatched by the nodes of the network so as to register with said access point; and in that
- said dispatching step (E20) is performed solely in case of success of said first verification step (E18).

2. Method for processing an advertisement message (GWADV) according to Claim 1, comprising:
- a second verification step (E14), prior to said first verification step (E18), in the course of which said node implementing this method verifies that it has a status (R, I) representative of the fact that it is registered with said access point (30) or of the fact that it has contributed to the forwarding of a said registration request (RREQ) to said access point (30); and, in case of success of said second verification step (E14):
- a step (E16) of retransmitting said advertisement message (GWADV) to at least one node of said network while taking account of a broadcasting depth (TTL) included in said advertisement message (GWADV).

3. Computer program comprising instructions for the execution of the steps of the processing method according to Claim 1 or 2 when said program is executed by a computer (10).

4. Recording medium (13) readable by a computer (10) on which is recorded a computer program comprising instructions for the execution of the steps of the processing method according to Claim 1 or 2.

5. Node able to be used in a hybrid telecommunications network (1) comprising an access point (30), said node comprising:
- means (14) for receiving an advertisement message (GWADV) broadcast (D10) by said access point (30), optionally relayed by another node of said network (1);
- means (11) for verifying whether the node has a status (R, N) representative of the fact that it has not contributed to the forwarding of a registration request (RREQ) dispatched by a first node of the network so as to register with said access point with; and
- means (14) for dispatching a message in response (RREP-PA) to said advertisement message (GWADV) destined for said access point in case of success of said verification.

6. Method for selecting a route between a source node (S) and a destination node (D) in a hybrid telecommunication network (1), said method comprising:
- a step (C12, C14) of recording in a topology table (35) of an access point (30), for at least one node of said network, an identifier (ID_N) of this node and a route between said node and said access point (30), on receipt of a registration request (RREQ) sent (A10) by said node, said step being implemented by said access point (30);
- a step (D12) of receiving, by said access point, messages (RREP-PA) sent by nodes of said network (1) in response to an advertisement message (GWADV) broadcast (D10) by said access point (30), said messages received (RREP-PA) comprising a route between the message sender node and said access point (30), a said message received (RREP-PA) not being dispatched by a said node only in the case where this node has verified that it had a status (R, N) representative of the fact that it has not contributed to the forwarding of a said registration request (RREQ); and
- a step (G14) of selecting, by said access point, a route from among all the possible routes between said source node (S) and said destination node (D) that are determined on the basis of said response messages received (RREP-PA).

7. Selection method according to Claim 6, comprising a step (D14) in the course of which said access point (30) records in said topology table (35) a route extracted from said message received (RREP-PA), between the sender node sending this message (RREP-PA) and said access point (30).

8. Selection method according to Claim 6 or 7, comprising that said advertisement message (GWADV) is broadcast by said access point (30) with a depth of a hop and relayed in said network 1 by the nodes of said network having a predetermined status (R, I).

9. Selection method according to any one of Claims 6 to 8, furthermore comprising a first step (G20) of searching for said destination node (D) at at least one other access point (30₁) if said access point does not know said destination node (D).

10. Selection method according to Claim 9, comprising, in case of failure of said first search step (G20), a second step (G24) of searching for said destination node (D) in the network (1) by a broadcasting-based search mechanism.

11. Selection method according to any one of Claims 6 to 10, comprising that said route selection step (G14) takes at least into account:
- the number of hops between said source node (S) and said destination node (D) in each of said possible routes; or
- the fact that a said possible route does or does not pass through said access point (30); or
- a quality of service on each of said possible routes, evaluated as a function of an application type included in said route obtaining request (RREQ).

12. Computer program comprising instructions for the execution of the steps of the selection method according to any one of Claims 6 to 11 when said program is executed by a computer (30).

13. Recording medium (33) readable by a computer (30) on which is recorded a computer program comprising instructions for the execution of the steps of the selection method according to any one of Claims 6 to 11.

14. System comprising, in a hybrid telecommunications network comprising at least one access point (30) and at least one node:
- said node comprising:
- means (14) for receiving an advertisement message (GWADV) broadcast (D10) by said access point (30), optionally relayed by another node of said network (1);
- means (11) for verifying whether it has a status (R, N) representative of the fact that it has not contributed to the forwarding of a registration request (RREQ), the registration requests being dispatched by the nodes of the network so as to register with said access point; and
- means (14) for dispatching a message in response (RREP-PA) to said advertisement message (GWADV) destined for said access point in case of success of said verification;
- said access point comprising means for recording in a topology table (35), on receipt of a registration request (RREQ) sent (A10) by a node an identifier (ID_N) of this node and a route between said node and said access point (30);
- said access point comprising:
means for receiving messages (RREP-PA) sent by nodes of said network (1) in response to said advertisement message (GWADV) these messages (RREP-PA) comprising a route between this sender node and said access point (30);
- means for recording in said topology table (35) of said route, in association with an identifier (ID_N) of said sender node;
- means for receiving a request (RREQ) sent (F10) by a source node (S) so as to obtain a route to said destination node (D);
- means for selecting a route from among all the possible routes between said source node (S) and said destination node (D) that are determined on the basis of said response messages received (RREP-PA); and
- means for dispatching a message (RREP) comprising said selected route to said source node (S).

15. Hybrid network (1) comprising a system according to Claim 14.
